# EUROPEAN PATENT APPLICATION

(11) **EP 4 811 262 A1**
(43) Date of publication of application: **23.09.2026**
(21) Application number: 24902210.4
(22) Date of filing: 28.08.2024
(51) Int. Cl.: G06Q 40/12

(54) **FINANCIAL DATA PROCESSING METHOD AND RELATED APPARATUS**

(30) Priority: 15.12.2023 CN 202311734349
(71) Applicant: Huawei Technologies Co., Ltd., Shenzhen, Guangdong 518129 (CN)
(72) Inventor: YUAN, Yuan, Shenzhen, Guangdong 518129 (CN); OUYANG, Sicheng, Shenzhen, Guangdong 518129 (CN); SHI, Yichen, Shenzhen, Guangdong 518129 (CN); DENG, Yanli, Shenzhen, Guangdong 518129 (CN)
(74) Representative: Pfenning, Meinig & Partner mbB
(86) International application number: PCT/CN2024/114985
(87) International publication number: WO 2025/123784

(57) **Abstract**

A financial data processing method is provided, applied to the processing of financial data in the financial field. The method uses a computational graph including nodes and edges to represent a financial data processing procedure. The nodes in the computational graph indicate input financial data, and an algorithm model function and an operation rule function that are for processing the financial data. During execution of the computational graph, the data or functions indicated by the nodes are sequentially called, enabling a complete series of financial data processing operations. In this way, data, an algorithm model, and an operation rule are visually integrated, improving the interpretability of the financial data processing procedure. In addition, when the financial data processing procedure is visually presented based on the computational graph, the financial data processing procedure can be modified simply by adjusting a node in the computational graph, thereby facilitating analysis and adjustment of the financial data processing procedure.

## Description

This application claims priority to Chinese Patent Application No. 202311734349.3, filed with the China National Intellectual Property Administration on December 15, 2023 and entitled "FINANCIAL DATA PROCESSING METHOD AND RELATED APPARATUS", which is incorporated herein by reference in its entirety.

### TECHNICAL FIELD

This application relates to the field of financial computing technologies, and in particular, to a financial data processing method and a related apparatus.

### BACKGROUND

Financial forecasting relies on data from an enterprise's business and financial activities over a recent period, as well as external information such as macroeconomic conditions and competitor performance. It uses systematic quantitative analysis techniques combined with rules from the enterprise's operational value chain to predict the enterprise's future financial status and operational performance.

The purpose of financial forecasting is to enhance proactive financial management, anticipate risks, and quantify potential impact of the risks, thereby mitigating uncertainty of enterprise management. This ensures that expected goals of financial plans remain aligned with dynamic external environments and economic conditions, and allows for timely quantification of the implementation effects of financial plans. In general, financial forecasting provides an important basis for enterprise management personnel to conduct lean management and make scientific decisions.

Currently, financial forecasting works as follows: Financial professionals establish operational relationships between various types of financial data based on financial domain knowledge (for example, the articulation relationships between financial indicators), to establish a financial forecasting model and obtain the final forecasting result by running the financial forecasting model. However, existing financial forecasting models are typically executed as code that outputs final forecasting results, rendering the underlying operational logic between financial data invisible, which hinders analysis and adjustment of the financial forecasting model.

### SUMMARY

This application provides a financial data processing method that improves visualization of a financial data processing procedure, facilitating analysis and adjustment of the financial data processing procedure.

A first aspect of this application provides a financial data processing method, applied to processing financial data in the financial field. The method includes: first, obtaining a first computational graph. The first computational graph is a directed acyclic graph, and indicates a financial data processing procedure. In addition, the first computational graph includes a plurality of nodes and a plurality of directed edges, the plurality of nodes are connected by using the plurality of directed edges, and the plurality of directed edges are used to represent data dependencies between the nodes. In other words, the directed edges between the nodes possess directionality, representing flow directions of data. In addition, the plurality of nodes include a first node, a second node, and a third node. The first node indicates financial input data, the second node indicates a pre-registered algorithm model function, and the third node indicates a rule function constructed based on an operation rule of financial data.

Then, an execution sequence of the plurality of nodes in the first computational graph may be determined based on the data dependencies between the nodes in the first computational graph, to sequentially execute the plurality of nodes in the first computational graph, so as to obtain an output result. The output result includes output data corresponding to the plurality of nodes.

A process of executing the first node includes obtaining the financial input data and using the financial input data as input data for a node connected to the first node, a process of executing the second node includes calling the algorithm model function to process input data of the second node, and a process of executing the third node includes calling the rule function to perform a rule operation on input data of the third node.

In this solution, a computational graph including nodes and edges is used to represent a financial data processing procedure, and the nodes in the computational graph indicate input financial data, and an algorithm model function and an operation rule function that are for processing the financial data. During execution of the computational graph, the data or functions indicated by the nodes are sequentially called, enabling a complete series of financial data processing operations. In this way, data, an algorithm model, and an operation rule are visually integrated, improving the interpretability of the financial data processing procedure. Integrating algorithmic models and expert-experience-based operation rules as different functions into the same processing procedure effectively leverages algorithmic models' capabilities in complex operations such as optimization problem solving and time series forecasting. This compensates for the inability of the expert-experience-based operation rules to handle such complex operations, enhancing efficiency and effectiveness of financial data analysis and processing. In addition, when the financial data processing procedure is visually presented based on the computational graph, the financial data processing procedure can be modified simply by adjusting a node in the computational graph, thereby facilitating analysis and adjustment of the financial data processing procedure.

In a possible implementation, the algorithm model function is obtained by registering a target algorithm model as an external function, and the second node may specifically indicate a call address of the algorithm model function, so that when the second node is executed, the algorithm model can be called based on the call address indicated by the second node. The target algorithm model includes a statistical learning algorithm model and/or a machine learning algorithm model. For example, the target algorithm model includes an optimization problem solving model or an artificial intelligence model.

In this solution, the target algorithm model is registered as an external function in advance, and a manner of calling the external function is indicated by a node in the computational graph, so that the external target algorithm model and another financial rule operation can be organically integrated in the same computing procedure. In this way, advantages of the algorithm model and a conventional financial rule operation are integrated in the same computing procedure, flexibly addressing complex data processing requirements in the financial field.

In a possible implementation, the rule function is obtained based on a pre-constructed expert experience model, and the expert experience model indicates a plurality of operations to be sequentially performed on input data. In short, for specific types of financial data, corresponding expert experience models may be pre-constructed based on the expert experience, to indicate a process of performing operation processing on the specific types of financial data. In this way, the expert experience model is defined as a rule function and the defined function is indicated by a node, so that the expert experience model can be called, and processing of the specific type of financial data can be completed.

In this solution, the pre-constructed expert experience model is defined as a rule function, so that one node in the computational graph can indicate the entire expert experience model. This ensures that the expert experience model can be reused when various computational graphs are constructed, and facilitates organic integration of the expert experience model and another operation in the computational graph, without displaying, in the computational graph, an internal detail structure of the expert experience model, thereby improving visualization of the computational graph.

In a possible implementation, the financial data processing method further includes: obtaining a second computational graph, where the second computational graph is obtained by adjusting a portion of the nodes in the first computational graph. Optionally, the portion of the nodes that are adjusted in the first computational graph include, for example, any one or more of the following nodes: the node indicating the financial input data, the node indicating the algorithm model function, or the node indicating the rule function.

Then, a target node having output data that changes relative to the first computational graph is determined in the second computational graph based on a location of an adjusted node in the second computational graph. The target node includes the adjusted node and a node that can be reached by the adjusted node by using a directed edge.

Then, a plurality of nodes in the second computational graph are sequentially executed based on data dependencies between the nodes in the second computational graph.

Finally, a change in the output data of the target node is displayed based on an execution result of the first computational graph and an execution result of the second computational graph. Because a node with affected output data is the target node, after execution of the second computational graph is completed, the execution result of the second computational graph and the execution result of the first computational graph (that is, output data of each node) may be compared, to obtain and display the change in the output data of the target node. The change in the output data of the target node may be information such as values of the output data before and after the change, a change percentage of the output data, and a change amount of the output data.

In this solution, an affected node before and after computational graph adjustment is analyzed, and a specific change in the affected node is presented, enabling a user to quickly learn of impact on the entire financial data processing procedure after the computational graph adjustment.

In a possible implementation, the sequentially executing the plurality of nodes in the first computational graph based on the data dependencies between the nodes in the first computational graph specifically includes: performing orchestration based on the data dependencies between the nodes in the first computational graph, to obtain a first node queue and a second node queue, where both the first node queue and the second node queue include a plurality of sequentially ordered nodes, and there is no data dependency between the nodes included in the first node queue and the nodes included in the second node queue; and then, executing the first node queue and the second node queue in parallel, where respective node execution sequences for the first node queue and the second node queue are determined based on ordering results of the nodes in the respective node queues.

In this solution, a plurality of node queues that can be executed in parallel are generated based on the data dependencies between the nodes in the computational graph, and the node queue includes a plurality of sequentially ordered nodes, so that branches that have no data dependency in the computational graph can be executed in parallel, thereby improving execution efficiency of the computational graph.

In a possible implementation, the sequentially executing the plurality of nodes in the first computational graph based on the data dependencies between the nodes in the first computational graph further includes: performing orchestration based on the data dependencies between the nodes in the first computational graph, to obtain a third node queue, where the third node queue includes a plurality of sequentially ordered nodes. The third node queue has a data dependency on both the first node queue and the second node queue, in other words, the third node queue depends on outputs of the first node queue and the second node queue. Then, output data of the first node queue and output data of the second node queue are used as input data for the third node queue, and the third node queue is executed.

In this solution, when node queues are generated based on the data dependencies between the nodes in the computational graph, in addition to node queues that can be executed in parallel, node queues that can be executed in series are also generated, to ensure that the generated node queues can comply with computational logic of the computational graph, ensure that the computational logic of the entire computational graph can be executed by executing the node queues, and effectively improve execution efficiency of the computational graph.

In a possible implementation, the obtaining the first computational graph includes: obtaining a plurality of node creation instructions and a plurality of node connection instructions, where the plurality of node creation instructions are each used to instruct creation of a node in the first computational graph, and the plurality of node connection instructions are each used to instruct connection of the created nodes. Any one of the plurality of node creation instructions may be used to instruct creation of a data node or an operation node, for example, create the node indicating the financial input data, or create the node indicating the rule function or the algorithm model function. In this way, the plurality of nodes are created based on the plurality of node creation instructions, and the plurality of directed edges are created based on the plurality of node connection instructions, to obtain the first computational graph.

In other words, an execution device creates the nodes based on the node creation instructions, and connects the created nodes based on the node connection instructions, to finally obtain the first computational graph including the plurality of nodes and the plurality of directed edges.

In a possible implementation, the first node specifically indicates a type of the financial input data (for example, a type like inventory data, historical price data, a historical shipment volume, or a predicted price), and there is a mapping relationship between the type of the financial input data and a target data structure. That is, the first node indicates the type of the financial data, to map the financial data to the target data structure.

In this way, when the first node is executed, data indicated by the target data structure may be called as the financial input data based on the type of the financial input data indicated by the first node and the mapping relationship. The target data structure may be, for example, a data structure like a table, a queue, or an array, and is used to store the financial input data.

In a possible implementation, the first computational graph further includes a fourth node, and the fourth node indicates a financial indicator articulation model. A process of executing the fourth node includes calling the financial indicator articulation model to perform an articulation operation on a plurality of pieces of input data of the fourth node. Specifically, the financial indicator articulation model is a pre-constructed model, which is used to perform an operation on financial indicators that have an articulation relationship. For example, a simple financial indicator articulation model may be a model for obtaining a net profit. In this case, operation logic of the financial indicator articulation model is: Net profit=Total revenue-Total cost.

A second aspect of this application provides a financial data processing apparatus, including: an obtaining module, configured to obtain a first computational graph, where the first computational graph includes a plurality of nodes and a plurality of directed edges, the plurality of nodes are connected by using the plurality of directed edges, the plurality of directed edges are used to represent data dependencies between the nodes, the plurality of nodes include a first node, a second node, and a third node, the first node indicates financial input data, the second node indicates a pre-registered algorithm model function, and the third node indicates a rule function constructed based on an operation rule of financial data; and a processing module, configured to sequentially execute the plurality of nodes in the first computational graph based on the data dependencies between the nodes in the first computational graph, to obtain an output result, where the output result includes output data corresponding to the plurality of nodes. A process of executing the first node includes obtaining the financial input data and using the financial input data as input data for a node connected to the first node, a process of executing the second node includes calling the algorithm model function to process input data of the second node, and a process of executing the third node includes calling the rule function to perform a rule operation on input data of the third node.

In a possible implementation, the algorithm model function is obtained by registering a target algorithm model as an external function, and the target algorithm model includes a statistical learning algorithm model and/or a machine learning algorithm model.

In a possible implementation, the rule function is obtained based on a pre-constructed expert experience model, and the expert experience model indicates a plurality of operations to be sequentially performed on input data.

In a possible implementation, the obtaining module is further configured to obtain a second computational graph, where the second computational graph is obtained by adjusting a portion of the nodes in the first computational graph. The processing module is further configured to determine, in the second computational graph based on a location of an adjusted node in the second computational graph, a target node having output data that changes relative to the first computational graph. The processing module is further configured to sequentially execute a plurality of nodes in the second computational graph based on data dependencies between the nodes in the second computational graph. The processing module is further configured to display a change in the output data of the target node based on an execution result of the first computational graph and an execution result of the second computational graph.

In a possible implementation, the portion of the nodes includes any one or more of the following nodes: the node indicating the financial input data, the node indicating the algorithm model function, or the node indicating the rule function.

In a possible implementation, the processing module is further configured to: perform orchestration based on the data dependencies between the nodes in the first computational graph, to obtain a first node queue and a second node queue, where both the first node queue and the second node queue include a plurality of sequentially ordered nodes, and there is no data dependency between the nodes included in the first node queue and the nodes included in the second node queue; and execute the first node queue and the second node queue in parallel, where respective node execution sequences for the first node queue and the second node queue are determined based on ordering results of the nodes in the respective node queues.

In a possible implementation, the processing module is further configured to: perform orchestration based on the data dependencies between the nodes in the first computational graph, to obtain a third node queue, where the third node queue includes a plurality of sequentially ordered nodes; and use output data of the first node queue and output data of the second node queue as input data for the third node queue, and execute the third node queue.

In a possible implementation, the obtaining module is further configured to obtain a plurality of node creation instructions and a plurality of node connection instructions, where the plurality of node creation instructions are each used to instruct creation of a node in the first computational graph, and the plurality of node connection instructions are each used to instruct connection of the created nodes. The processing module is further configured to create the plurality of nodes based on the plurality of node creation instructions, and create the plurality of directed edges based on the plurality of node connection instructions, to obtain the first computational graph.

In a possible implementation, the first node specifically indicates a type of the financial input data, and there is a mapping relationship between the type of the financial input data and a target data structure. The obtaining module is further configured to call, based on the type of the financial input data indicated by the first node and the mapping relationship, data indicated by the target data structure as the financial input data.

In a possible implementation, the first computational graph further includes a fourth node, and the fourth node indicates a financial indicator articulation model. A process of executing the fourth node includes calling the financial indicator articulation model to perform an articulation operation on a plurality of pieces of input data of the fourth node.

A third aspect of this application provides a financial data processing apparatus. The apparatus may include a processor. The processor is coupled to a memory. The memory stores program instructions. When the program instructions stored in the memory are executed by the processor, the method according to the first aspect or any one of the implementations of the first aspect is implemented. For details of steps that are performed by the processor and that are in the possible implementations of the first aspect, refer to the first aspect. Details are not described herein again.

A fourth aspect of this application provides a computer-readable storage medium. The computer-readable storage medium stores a computer program. When the computer program is run on a computer, the computer is caused to perform the method according to any one of the implementations of the first aspect.

A fifth aspect of this application provides a circuit system. The circuit system includes a processing circuit. The processing circuit is configured to perform the method according to any one of the implementations of the first aspect.

A sixth aspect of this application provides a computer program product. The computer program product includes program code. When the program code is run on a computer, the computer is caused to perform the method according to any one of the implementations of the first aspect.

A seventh aspect of this application provides a chip system. The chip system includes a processor, configured to support a server or a feature filtering apparatus in implementing a function in any one of the implementations of the first aspect, for example, processing data and/or information in the foregoing method. In a possible design, the chip system further includes a memory, and the memory is configured to store program instructions and data that are necessary for the server or the feature filtering apparatus. The chip system may include a chip, or may include a chip and another discrete device.

For beneficial effects of the second aspect to the seventh aspect, refer to the descriptions of the first aspect. Details are not described herein again.

### BRIEF DESCRIPTION OF DRAWINGS

FIG. 1 is a diagram of a system architecture according to an embodiment of this application;
FIG. 2 is a diagram of a structure of an execution device 101 according to an embodiment of this application;
FIG. 3 is a schematic flowchart of a financial data processing method according to an embodiment of this application;
FIG. 4 is a diagram of a computational graph according to an embodiment of this application;
FIG. 5 is a diagram of a decision tree model according to an embodiment of this application;
FIG. 6 is a diagram of executing a decision tree model according to an embodiment of this application;
FIG. 7 is a diagram of adjusting a decision tree model according to an embodiment of this application;
FIG. 8 is a diagram of creating a node indicating a time series forecasting algorithm model according to an embodiment of this application;
FIG. 9 is a diagram of generating node queues based on a computational graph according to an embodiment of this application;
FIG. 10 is another schematic flowchart of a financial data processing method according to an embodiment of this application;
FIG. 11 is a diagram of display of an adjusted computational graph according to an embodiment of this application;
FIG. 12 is a diagram of a structure of a financial data processing apparatus according to an embodiment of this application;
FIG. 13 is a diagram of a structure of an execution device according to an embodiment of this application;
FIG. 14 is a diagram of a structure of a chip according to an embodiment of this application; and
FIG. 15 is a diagram of a structure of a computer-readable storage medium according to an embodiment of this application.

### DESCRIPTION OF EMBODIMENTS

To make the objectives, technical solutions, and advantages of this application clearer and more comprehensible, the following describes embodiments of this application with reference to the accompanying drawings. It is clear that the described embodiments are merely some rather than all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the descriptions termed in such a manner are interchangeable in proper cases so that embodiments can be implemented in another order than the order illustrated or described in this application. In addition, the terms "include", "have", and any other variants thereof are intended to cover non-exclusive inclusion. For example, a process, method, system, product, or device that includes a series of steps or modules is not necessarily limited to those expressly listed steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution order of the steps in the procedure that have been named or numbered can be changed based on a technical objective to be achieved, provided that same or similar technical effects can be achieved. Unit division in this application is logical division and may be other division during implementation in actual application. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

For ease of understanding, the following first describes some technical terms used in embodiments of this application.

### (1) Articulation relationship

An articulation relationship is a necessary, mutually verifiable relationship between relevant indicators and figures in accounting books and reports. For example, an ending balance of each general ledger account and a sum of ending balances of secondary accounts or subsidiary ledger accounts of the general ledger account exhibit a mutually consistent and verifiable relationship. For another example, a total amount of sales revenue, sales tax, sales factory cost, sales expense, technology transfer fee, and sales profit in a product sales detail report and the quantity of the same items in a profit statement also exhibit a mutually verifiable relationship.

Generally, an articulation relationship between financial indicators can be represented by four arithmetic operations.

### (2) Four arithmetic operations

Four arithmetic operations refer to addition, subtraction, multiplication, and division.

### (3) Aggregation operation

An aggregation operation refers to calculating a single value from a set of values, for example, calculating an average value, a largest value, or an accumulated value from a set of values.

### (4) Directed acyclic graph (Directed acyclic graph, DAG)

In mathematics, especially in graph theory and computer science, a directed acyclic graph is a directed graph without cycles. Specifically, if a directed graph, after traversing several edges, cannot return to a vertex from which it started, this graph is a directed acyclic graph.

### (5) Statistical learning

Statistical learning, also referred to as statistical machine learning, is a discipline in which a computer constructs a probabilistic statistical model based on data and uses the model for prediction and analysis. Data is an object of statistical learning. The premise of the basic assumption of statistical learning about data is that data of the same type has specific statistical regularity. The data has a common property and therefore can be processed in a statistical learning method due to the statistical regularity of the data.

In general, the statistical learning method is summarized as follows: Based on a given and limited training data set for learning, it is assumed that data is generated in an independently and identically distributed manner, and it is assumed that a model to be learned belongs to a function set, which is referred to as a hypothesis space. The statistical learning method is applied to a specific evaluation criterion, to select an optimal model from the hypothesis space, so that the optimal model achieves optimal prediction for known training data and unknown test data under the given evaluation criterion. The optimal model is selected by using an algorithm.

### (6) Machine learning

Machine learning is a multi-field interdisciplinary field involving a plurality of disciplines such as probability theory, statistics, approximation theory, convex analysis, and algorithmic complexity theory. Machine learning focuses on how computers simulate or implement learning behavior of human beings, to acquire new knowledge or skills and reorganize existing knowledge structures for continuous performance improvement.

### (7) Application programming interface (Application Programming Interface, API)

APIs are predefined functions for providing applications or developers with a capability of accessing a group of routines based on specific software or hardware, without accessing source code or understanding details of internal working mechanisms.

Currently, financial forecasting works as follows: Financial professionals establish operational relationships between various types of financial data based on financial domain knowledge (for example, the articulation relationships between a financial indicators), to establish a financial forecasting model and obtain the final forecasting result by running the financial forecasting model. However, existing financial forecasting models are typically executed as code that outputs final forecasting results, rendering the underlying operational logic between financial data invisible, which hinders analysis and adjustment of the financial forecasting model.

In addition, when the financial forecasting model is established based on the financial domain knowledge, it is usually difficult for experts to manually exhaust all possible combinations of assumptions to obtain an optimal combination strategy. As a result, it is difficult to obtain an optimal result by using the established financial forecasting model. Moreover, prediction logic or an articulation relationship of some financial indicators is not governed by specific rules, requiring experts to extracting patterns from data, which is difficult and inefficient.

This application provides a financial data processing method. The method uses a computational graph including nodes and edges to represent a financial data processing procedure. The nodes in the computational graph indicates input financial data, and an algorithm model function and an operation rule function that are for processing the financial data. During execution of the computational graph, the data or functions indicated by the nodes are sequentially called, enabling a complete series of financial data processing operations. In this way, data, an algorithm model, and an operation rule are visually integrated, improving the interpretability of the financial data processing procedure. Integrating algorithmic models and expert-experience-based operation rules as different functions into the same processing procedure effectively leverages algorithmic models' capabilities in complex operations such as optimization problem solving and time series forecasting. This compensates for the inability of the expert-experience-based operation rules to handle such complex operations, enhancing efficiency and effectiveness of financial data analysis and processing. In addition, when the financial data processing procedure is visually presented based on the computational graph, the financial data processing procedure can be modified simply by adjusting a node in the computational graph, thereby facilitating analysis and adjustment of the financial data processing procedure.

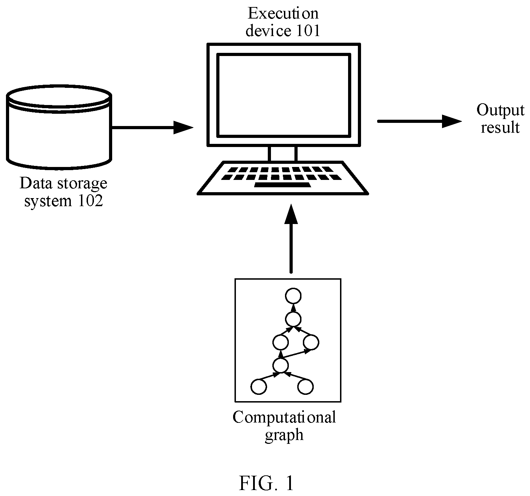

FIG. 1 is a diagram of a system architecture according to an embodiment of this application. As shown in FIG. 1, in the system architecture, an execution device 101 may be, for example, a device like a personal computer, a notebook computer, or a server. In addition, the execution device 101 is communicatively connected to a data storage system 102, and is configured to obtain data stored in the data storage system 102. For example, the data storage system 102 may be implemented by a storage device deployed on the execution device 101. For example, the execution device 101 is a personal computer, and the data storage system 102 is a hard disk deployed on the personal computer. The data storage system 102 may alternatively be implemented by a storage device independent of the execution device. For example, the execution device 101 is a computing server, and the data storage system 102 is a data server dedicated to storing data.

During working, the execution device 101 may obtain a computational graph used to represent a financial data processing procedure. The computational graph is a directed acyclic graph, and nodes are used to represent financial data and an operation mode of the financial data (for example, an algorithm model function or a rule function used to process the financial data). In this way, the execution device 101 can sequentially execute the nodes based on a connection relationship between the nodes in the computational graph, and call corresponding financial data or functions from the data storage system when executing the nodes, to obtain an output result (that is, a processing result of the financial data) after an operation is performed in the computational graph.

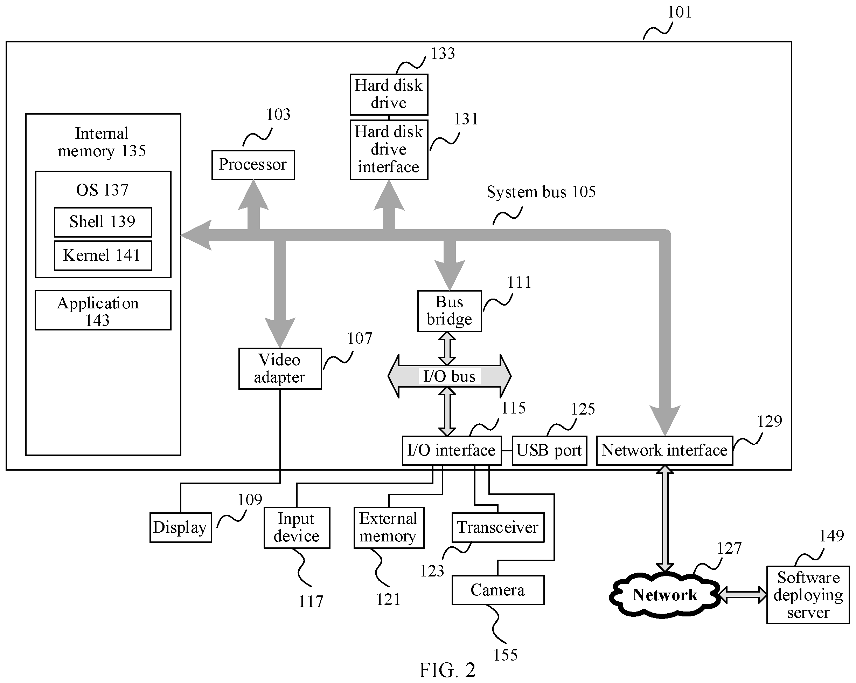

FIG. 2 is a diagram of a structure of an execution device 101 according to an embodiment of this application. As shown in FIG. 2, the execution device 101 to which the financial data processing method provided in embodiments of this application is applied includes a processor 103, and the processor 103 is coupled to a system bus 105. The processor 103 may be one or more processors, and each processor may include one or more processor cores. A video adapter (video adapter) 107 is further included, and the video adapter may drive a display 109, and the display 109 is coupled to the system bus 105. The system bus 105 is coupled to an input/output (I/O) bus through a bus bridge 111. An I/O interface 115 is coupled to the I/O bus. The I/O interface 115 communicates with a plurality of I/O devices, such as an input device 117 (for example, a touchscreen), an external memory 121 (for example, a hard disk, a floppy disk, an optical disc, or a USB flash drive), a multimedia interface, a transceiver 123 (which may send and/or receive a radio communication signal), a camera 155 (which may capture static and dynamic digital video images), and an external USB port 125. Optionally, an interface connected to the I/O interface 115 may be a USB interface.

The processor 103 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus like an ASIC.

The execution device 101 may communicate with a software deploying server 149 through a network interface 129. For example, the network interface 129 is a hardware network interface, for example, a network interface card. A network 127 may be an external network, for example, the internet, or an internal network, for example, the Ethernet or a virtual private network (virtual private network, VPN). Optionally, the network 127 may alternatively be a wireless network, for example, a Wi-Fi network or a cellular network.

A hard disk drive interface 131 is coupled to the system bus 105. A hardware drive interface is connected to a hard disk drive 133. An internal memory 135 is coupled to the system bus 105. Data running in the internal memory 135 may include an operating system (OS) 137, an application 143, and a schedule table of the execution device 101.

The operating system includes a shell 139 and a kernel (kernel) 141. The shell 139 is an interface between a user and the kernel of the operating system. The shell is an outermost layer of the operating system. The shell manages interaction between the user and the operating system: waiting for an input from the user, interpreting the input from the user to the operating system, and processing various output results of the operating system.

The kernel 141 includes parts of the operating system that are used to manage a memory, a file, a peripheral, and a system resource. The kernel 141 directly interacts with hardware. The kernel of the operating system usually runs a process, provides inter-process communication, and provides CPU time slice management, interruption, memory management, I/O management, and the like.

The foregoing describes the system architecture and the execution device to which the method provided in embodiments of this application is applied. The following describes in detail an execution procedure of the financial data processing method provided in embodiments of this application.

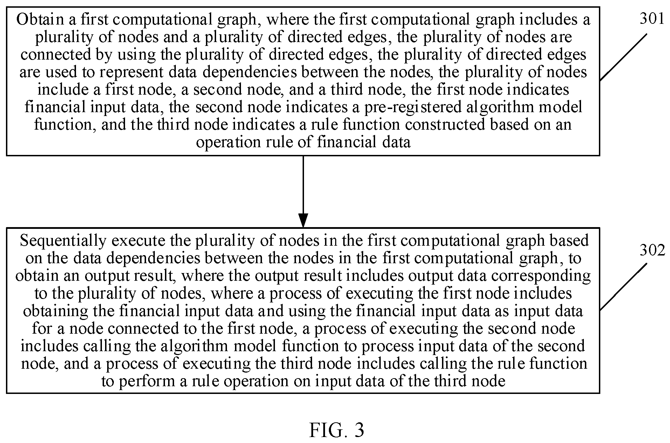

FIG. 3 is a schematic flowchart of a financial data processing method according to an embodiment of this application. As shown in FIG. 3, the financial data processing method includes the following steps 301 and 302.

Step 301: Obtain a first computational graph, where the first computational graph includes a plurality of nodes and a plurality of directed edges, the plurality of nodes are connected by using the plurality of directed edges, the plurality of directed edges are used to represent data dependencies between the nodes, the plurality of nodes include a first node, a second node, and a third node, the first node indicates financial input data, the second node indicates a pre-registered algorithm model function, and the third node indicates a rule function constructed based on an operation rule of financial data.

In this embodiment, the first computational graph is a DAG, indicating a financial data processing procedure. For the plurality of nodes and the plurality of directed edges included in the first computational graph, each node in the first computational graph is connected to at least one directed edge, and each directed edge is connected to two nodes. In addition, the directed edges between the nodes possess directionality, representing flow directions of data, and therefore can represent data dependencies between the nodes. For example, assuming that a node A and a node B are connected by using a directed edge, and a direction of the directed edge is from the node A to the node B, it indicates that output data of the node A flows to the node B, to be specific, the output data of the node A is used as input data for the node B, and the node B depends on the output data of the node A.

The plurality of nodes in the first computational graph actually include two types of nodes: data nodes and operation nodes. The data node is a node indicating data, for example, a node indicating input data of the first computational graph, or a node indicating output data of the operation node. The operation node is a node indicating to perform operation processing on data. Specifically, operation nodes may include, for example, the following types of nodes: a node indicating an algorithm model function, a node indicating a rule function, a node indicating a financial articulation model, a node performing decision and determining, and a node performing optimization solving.

Specifically, in this embodiment, the plurality of nodes in the first computational graph include the first node, the second node, and the third node. The first node indicates the financial input data, that is, the first node is the data node. The second node indicates the pre-registered algorithm model function, and the third node indicates the rule function constructed based on the operation rule of the financial data, that is, the second node and the third node are the operation nodes, and types of operations indicated by the second node and the third node are different.

Optionally, for the algorithm model function indicated by the second node, the algorithm model function may be obtained by registering a target algorithm model as an external function. In this case, when the target algorithm model is pre-registered as an external function, a registered algorithm model function may be obtained. The second node may specifically indicate a call address of the algorithm model function, so that upon execution of the second node, the target algorithm model may be called by an application programming interface (Application Programming Interface, API) based on the call address indicated by the second node, to perform data processing.

The target algorithm model includes a statistical learning algorithm model and/or a machine learning algorithm model. For example, the target algorithm model includes an optimization problem solving model (referred to as an optimization solving model for short), which is used to obtain an optimal solution under specific constraint conditions (for example, obtain an optimal allocation strategy based on constraint information such as a warehouse inventory, distances between a plurality of customers and a warehouse, and goods delivery statuses of a plurality of customers). For another example, the target algorithm model may be an artificial intelligence (Artificial Intelligence, AI) model, which is specifically a time series forecasting algorithm model, used to predict future data based on historical data (for example, predict future price data based on price data in historical time).

In this solution, the target algorithm model is registered as an external function in advance, and a manner of calling the external function is indicated by a node in the computational graph, so that the external target algorithm model and another financial rule operation can be organically integrated in the same computing procedure. In this way, advantages of the algorithm model and a conventional financial rule operation are integrated in the same computing procedure, flexibly addressing complex data processing requirements in the financial field.

Optionally, for the rule function indicated by the third node, the rule function may be obtained based on a pre-constructed expert experience model, and the expert experience model indicates a plurality of operations to be sequentially performed on input data of the third node.

It may be understood that, in the financial field, for some specific types of financial data, the financial data may be processed or obtained based on types of the financial data, domains of the financial data, and expert experience. For example, for an allocation strategy for a product (for example, a mobile phone or a router), a series of determining processing may be performed based on an inventory of the product and a customer proportion, to determine an allocation volume for each customer, so as to obtain the allocation strategy for the product. Therefore, the allocation strategy for the product can be obtained only by processing corresponding product inventory data and customer proportion data based on the expert experience. In addition, for the same type of financial data, in most cases, a manner of processing the financial data based on the expert experience usually does not change frequently. Therefore, in this embodiment, for specific types of financial data, corresponding expert experience models may be pre-constructed based on the expert experience, to indicate a process of performing operation processing on the specific types of financial data.

In addition, the pre-constructed expert experience model is defined as a rule function, so that one node in the computational graph can indicate the entire expert experience model. This ensures that the expert experience model can be reused when various computational graphs are constructed, and facilitates organic integration of the expert experience model and another operation in the computational graph, without displaying, in the computational graph, an internal detail structure of the expert experience model, thereby improving visualization of the computational graph.

Alternatively, the rule function indicated by the third node may be obtained based on any one or more of the following operations: four arithmetic operations, an aggregation operation, or condition determining. The condition determining may be performing a condition determining action on input data, and performing a corresponding action based on whether the input data meets a condition. For example, when a rule function is defined, one or more operations may be selected from the four arithmetic operations, the aggregation operation, or the condition determining for combination, to obtain a defined rule function.

In general, the rule function may be a function predefined based on the financial domain knowledge, meets an operation rule in the financial field, and can perform an operation on financial data, to obtain a corresponding operation result. A specific implementation of the rule function is not limited in this embodiment.

Optionally, the first computational graph in this embodiment may be preset on an execution device, or may be obtained by the execution device from another device in a network. The first computational graph may alternatively be constructed when the execution device responses to a user instruction.

For example, in a process of constructing the first computational graph, the execution device may obtain a plurality of node creation instructions and a plurality of node connection instructions, where the plurality of node creation instructions are each used to instruct to creation of a node in the first computational graph, and the plurality of node connection instructions are each used to instruct connection of the created nodes. Any one of the plurality of node creation instructions may be used to instruct creation of a data node or an operation node, for example, create the node indicating the financial input data, or create the node indicating the rule function or the algorithm model function. This is not specifically limited in this embodiment. Specifically, the user may generate the node creation instructions by performing one or more operations (for example, specifying a type of the created node, an operation indicated by the node, or a function called by the node) on a computational graph construction interface displayed by the execution device. In addition, the node connection instruction needs to indicate a node connection direction, that is, connection from a specific node to another specific node, to ensure that a directed edge can be subsequently generated based on the indicated node connection direction.

Then, the execution device creates the plurality of nodes based on the plurality of node creation instructions, and creates the plurality of directed edges based on the plurality of node connection instructions, to obtain the first computational graph. In other words, the execution device creates the nodes based on the node creation instructions, and connects the created nodes based on the node connection instructions, to finally obtain the first computational graph including the plurality of nodes and the plurality of directed edges.

A sequence in which the execution device obtains the plurality of node creation instructions and the plurality of node connection instructions is not limited in this embodiment. Generally, provided that the execution device has obtained at least two node creation instructions and created at least two nodes, the execution device may obtain node connection instructions, to connect the created nodes. Generally, the execution device obtains the node creation instructions and the node connection instructions in an interleaved manner. To be specific, after obtaining node creation instructions for a portion of nodes and creating corresponding nodes, the execution device may obtain node connection instructions for the portion of nodes, to connect the portion of nodes.

Step 302: Sequentially execute the plurality of nodes in the first computational graph based on the data dependencies between the nodes in the first computational graph, to obtain an output result, where the output result includes output data corresponding to the plurality of nodes.

Because each node is connected to at least one directed edge, and directed edges between nodes represents data dependencies between the nodes (that is, data flow directions between the nodes), an execution sequence of the plurality of nodes in the first computational graph can be determined based on the data dependencies between the nodes in the first computational graph. In this way, the plurality of nodes are sequentially executed based on the execution sequence of the plurality of nodes in the first computational graph, to obtain the output result of the first computational graph. The output result of the first computational graph may include output data of each of the plurality of nodes. In this way, after the output result of the first computational graph is obtained, the output data of each node is visually presented on the node in the first computational graph, so that the user can clearly learn of an operation result obtained by performing each operation step on the financial data. It should be noted that, for a data node in the first computational graph, output data of the data node may be financial data indicated by the data node.

In this embodiment, a process of executing the first node in the first computational graph includes obtaining the financial input data indicated by the first node and using the financial input data as input data for a node connected to the first node.

For example, the first node may specifically indicate a type of the financial input data (for example, a type like inventory data, historical price data, a historical shipment volume, or a predicted price), and there is a mapping relationship between the type of the financial input data and a target data structure. That is, the first node indicates the type of the financial data, to map the financial data to the target data structure. In this way, when the first node is executed, data indicated by the target data structure may be called as the financial input data based on the type of the financial input data indicated by the first node and the mapping relationship. The target data structure may be, for example, a data structure like a table, a queue, or an array, and is used to store the financial input data. For example, the historical price data may be stored in a form of a table, and a table used to store the historical price data is the target data structure. The type of the financial input data is indicated as the historical price data by the first node, so that the table storing the historical price data can be called, based on a mapping relationship between a historical price data type and the target data structure, as the financial input data indicated by the first node.

Because the second node indicates the pre-registered algorithm model function, a process of executing the second node includes calling the algorithm model function to process input data of the second node. For example, the second node may specifically indicate a name of the algorithm model function and the call address of the algorithm model function. In this way, the algorithm model function may be called by an API based on the call address indicated by the second node, and the input data of the second node is transferred to the called algorithm model function, to finally obtain an operation result returned by the algorithm model function. The operation result is used as output data of the second node.

Similarly, because the third node indicates the rule function, a process of executing the third node includes calling the rule function to perform a rule operation on the input data of the third node. For example, the third node may specifically indicate a name of the rule function and a call address of the rule function. Based on the call address indicated by the third node, the rule function may be called, and the input data of the third node may be transferred to the rule function, to finally obtain an operation result returned by the rule function.

Optionally, the first computational graph may further include a fourth node, and the fourth node indicates a financial indicator articulation model. The financial indicator articulation model is a pre-constructed model, which is used to perform an operation on financial indicators that have an articulation relationship. For example, a simple financial indicator articulation model may be a model for obtaining a net profit. In this case, operation logic of the financial indicator articulation model is: Net profit=Total revenue-Total cost. In actual application, various types of financial indicator articulation models may be pre-constructed based on specific service scenarios, for example, financial indicator articulation models such as a quantity-cost-price model, a pipeline model, a carry-forward volume allocation model, and a country risk model. A specific implementation of the financial indicator articulation model is not limited in this embodiment.

A process of executing the fourth node includes calling the financial indicator articulation model to perform an articulation operation on a plurality of pieces of input data of the fourth node. For example, when the financial indicator articulation model indicated by the fourth node is a model for obtaining a net profit, the plurality of pieces of input data of the fourth node include a total revenue and a total cost. In this case, the total cost may be subtracted from the total revenue by using the financial indicator articulation model, to obtain a total profit (that is, output data of the fourth node).

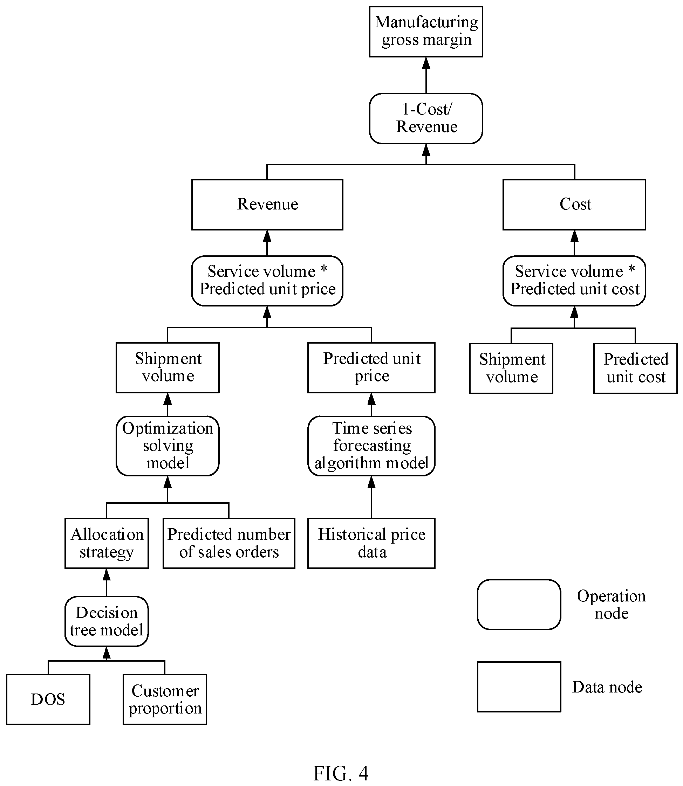

For example, FIG. 4 is a diagram of a computational graph according to an embodiment of this application. As shown in FIG. 4, the computational graph includes a plurality of nodes and a plurality of directed edges, and each node is connected to at least one directed edge. In addition, in the computational graph, the nodes are classified into operation nodes and data nodes. The operation nodes include a node indicating a decision tree model, a node indicating an optimization solving model, a node indicating a time series forecasting algorithm model, a node for solving a revenue, a node for solving a cost, and a node for solving a manufacturing gross margin.

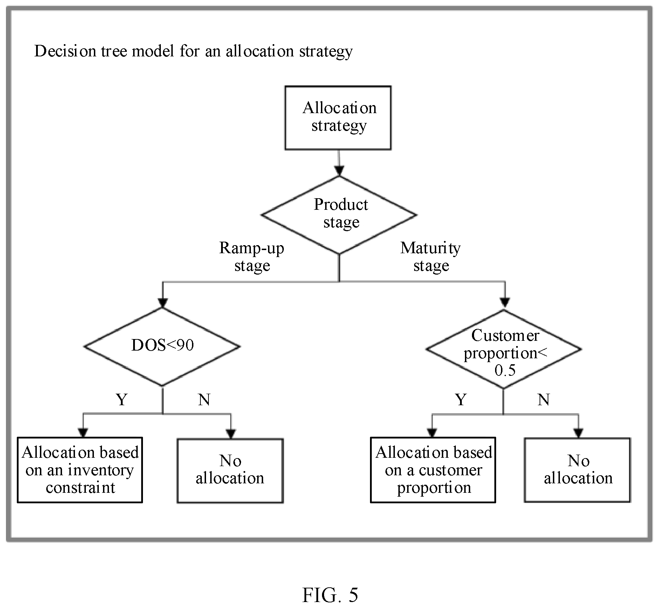

Specifically, the node indicating the decision tree model is, for example, the third node. To be specific, it indicates that the decision tree model indicated by the node is an expert experience model constructed based on expert experience, and the decision tree model is defined as a function in the computational graph. For example, FIG. 5 is a diagram of a decision tree model according to an embodiment of this application. As shown in FIG. 5, the decision tree model is actually a model pre-constructed by a user (for example, a financial expert), and indicates how to determine an allocation strategy based on days of supply (Days of Supply, DOS) and customer proportion.

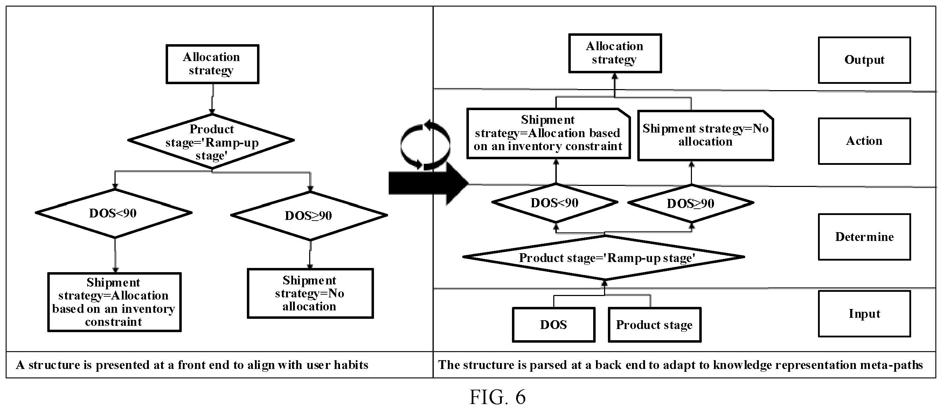

In addition, FIG. 6 is a diagram of executing a decision tree model according to an embodiment of this application. As shown in FIG. 6, a structure of the decision tree model presented at a front end may be determining processing sequentially performed from top to bottom in accordance with user habits. This better aligns with the user habits, facilitating users to check or adjust the decision tree model. When nodes corresponding to the decision tree model are executed, a back end performs inversion on the structure of the decision tree model through intermediate layer conversion, so that the structure of the decision tree model adapts to a structure of a knowledge representation meta-path. The knowledge representation meta-path is a minimum unit for expressing complete semantic logic (computational logic) in financial domain knowledge modeling, carries minimum logic of input+determining condition+action+output, and is also a minimum unit for parsing and inference through a graph model.

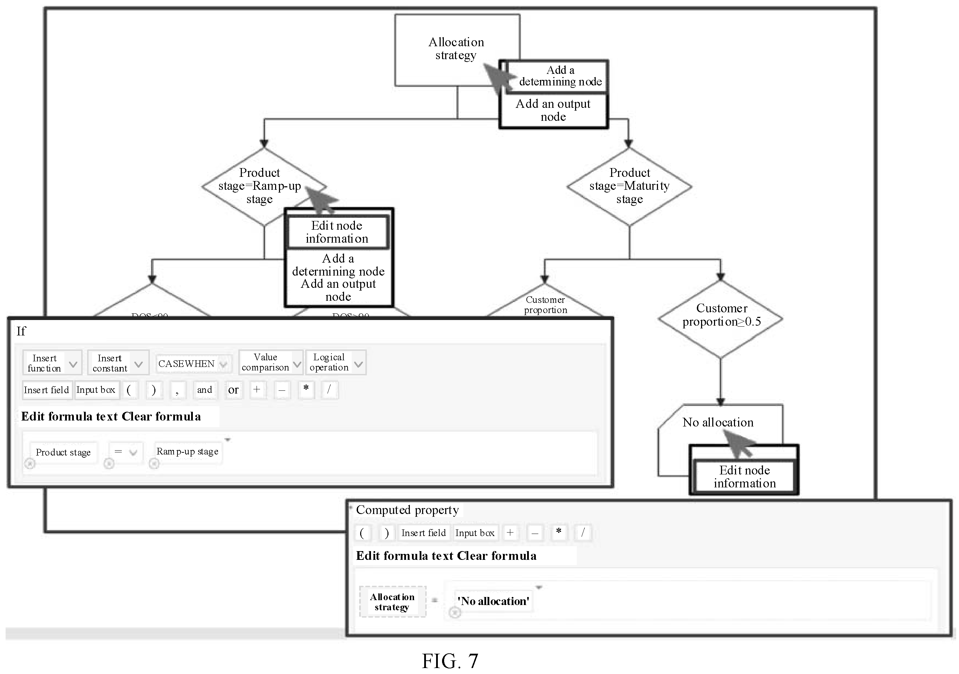

FIG. 7 is a diagram of adjusting a decision tree model according to an embodiment of this application. As shown in FIG. 7, in a process of constructing the decision tree model, a user may click each node in the decision tree model on a display interface, so that a modification option for each node may pop up. For example, when the user clicks an "allocation strategy" node, options of "add a determining node" and "add an output node" may pop up on the display interface, so that the user can continue to add a determining node or an output node to the decision tree model. For another example, when the user clicks a determining node "product stage=ramp-up stage", options of "edit node information", "add a determining node", and "add an output node" may pop up on the display interface. In addition, after the user clicks "edit node information", an operation mode that can be edited on the node further pops up on the display interface. For another example, when the user clicks an output node "no allocation", "edit node information" may pop up on the display interface, so that the user can modify an operation mode indicated by the node.

In addition, in FIG. 4, an optimization solving model is an algorithm model used to solve an optimization problem in statistical learning, and a time series forecasting algorithm model is a model used to predict a price in machine learning. Therefore, a node indicating the optimization solving model and a node indicating the time series forecasting algorithm model each are, for example, the second node, namely, a node indicating an algorithm model function. Both the optimization solving model and the time series forecasting algorithm model are registered as external functions in advance. Therefore, nodes in the computational graph may actually indicate call addresses of the optimization solving model and the time series forecasting algorithm model once registered as functions.

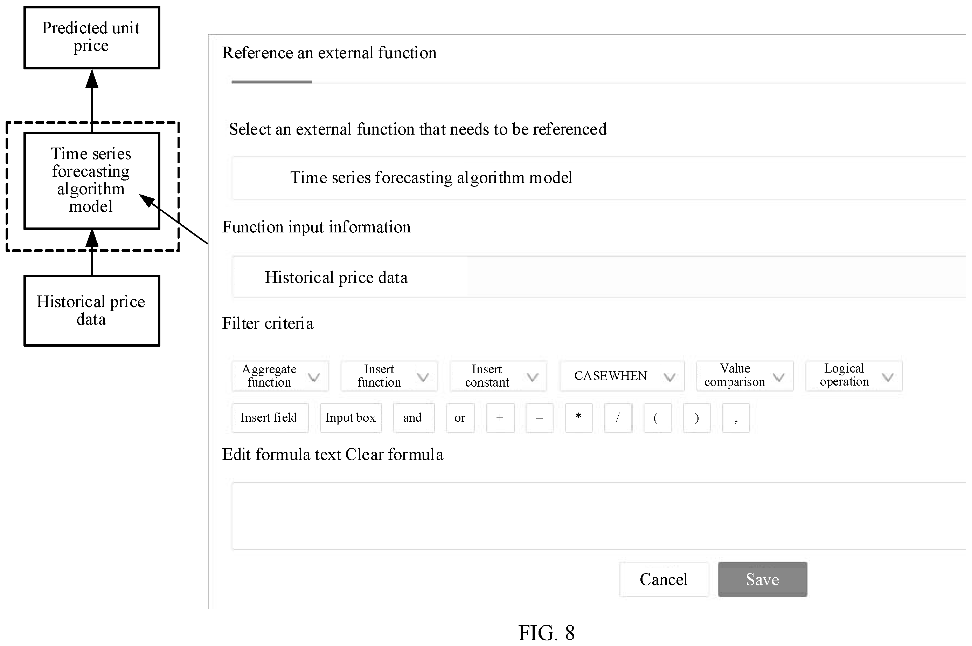

For example, FIG. 8 is a diagram of creating a node indicating a time series forecasting algorithm model according to an embodiment of this application. As shown in FIG. 8, during node creation, an interface for referencing an external function may be entered, to create a node indicating the external function. Then, an external function (for example, the time series forecasting algorithm model in FIG. 8) that needs to be referenced is selected on the interface for referencing the external function, and input data of the external function is determined, to complete node creation.

In FIG. 4, the revenue, the cost, and the manufacturing gross margin are all solved based on a financial indicator articulation model. Therefore, a node for solving the revenue, a node for solving the cost, and a node for solving the manufacturing gross margin each are equivalent to the fourth node, and indicate the financial indicator articulation model. An operation mode for financial indicators is predefined in each financial indicator articulation model. For example, revenue=service volume * predicted unit price, and cost=service volume * predicted unit cost.

The foregoing describes in detail the computational graph provided in this embodiment with reference to examples. The following describes in detail an execution process of the computational graph.

It may be understood that, in actual application, there may be a large quantity of nodes in the computational graph, different nodes may be located on different branches in the computational graph, and there is no data dependency between nodes on different branches. In this way, to improve execution efficiency of the computational graph, the nodes that have no data dependency on different branches may actually be executed in parallel, thereby accelerating the execution process of the entire computational graph.

For example, the process of sequentially executing the plurality of nodes in the first computational graph in step 302 may specifically include the following procedures: First, orchestration is performed based on data dependencies between the nodes in the first computational graph, to obtain a first node queue and a second node queue. Both the first node queue and the second node queue include a plurality of sequentially ordered nodes, and there is no data dependency between the nodes included in the first node queue and the nodes included in the second node queue. In other words, the first node queue may be generated based on nodes that have data dependencies on a branch in the first computational graph, and an ordering result of the plurality of nodes in the first node queue is determined based on the data dependencies between the nodes on this branch. The second node queue may be generated based on nodes that have data dependencies on another branch in the first computational graph, and an ordering result of the plurality of nodes in the second node queue is determined based on the data dependencies between the nodes on this branch. In this way, for different branches that have no data dependency in the first computational graph, corresponding node queues may be generated.

Then, the first node queue and the second node queue are executed in parallel, where respective node execution sequences for the first node queue and the second node queue are determined based on ordering results of the nodes in the respective node queues. Because there is no data dependency between the first node queue and the second node queue, the first node queue and the second node queue can be executed in parallel. In addition, when either of the first node queue and the second node queue is executed, nodes may be sequentially extracted for execution based on an ordering result of the nodes in the node queue, to ensure that an execution sequence of the nodes is aligned with the data dependencies between the nodes.

It should be noted that the foregoing describes, by using an example in which the first node queue and the second node queue are generated and executed in parallel, how to execute nodes on different branches in the computational graph in parallel. In actual application, for one computational graph, two or more node queues that can be executed in parallel may be generated. This is not specifically limited herein.

In this solution, a plurality of node queues that can be executed in parallel are generated based on the data dependencies between the nodes in the computational graph, and the node queue includes a plurality of sequentially ordered nodes, so that branches that have no data dependency in the computational graph can be executed in parallel, thereby improving execution efficiency of the computational graph.

Optionally, in some embodiments, for the first computational graph, in addition to the first node queue and the second node queue that can be obtained through orchestration, orchestration may be further performed based on the data dependencies between the nodes in the first computational graph, to obtain a third node queue. The third node queue includes a plurality of sequentially ordered nodes. The third node queue has a data dependency on both the first node queue and the second node queue, in other words, the third node queue depends on outputs of the first node queue and the second node queue.

In this way, after execution of the first node queue and the second node queue is completed, output data of the first node queue and output data of the second node queue may be used as input data for the third node queue, and the third node queue is executed.

It may be understood that a plurality of branches that have no data dependency in the computational graph may be aggregated to the same node, to be specific, output data of the plurality of branches is used as input data for the same node. In this case, the node and another node after the node may form an aggregation branch, and the aggregation branch depends on the plurality of previous branches.

It should be noted that, in the foregoing description, the third node queue is executed in series after the first node queue and the second node queue are executed in parallel. However, in some possible embodiments, a node may be followed by a plurality of branches. In this case, a node queue is first executed, and then a plurality of node queues are executed in parallel. In other words, an execution sequence of node queues is determined based on a specific structure of the computational graph. For branches that have no data dependency, node queues that are executed in parallel may be generated.

In general, in this solution, when node queues are generated based on the data dependencies between the nodes in the computational graph, in addition to node queues that can be executed in parallel, node queues that can be executed in series are also generated, to ensure that the generated node queues can comply with computational logic of the computational graph, ensure that the computational logic of the entire computational graph can be executed by executing the node queues, and effectively improve execution efficiency of the computational graph.

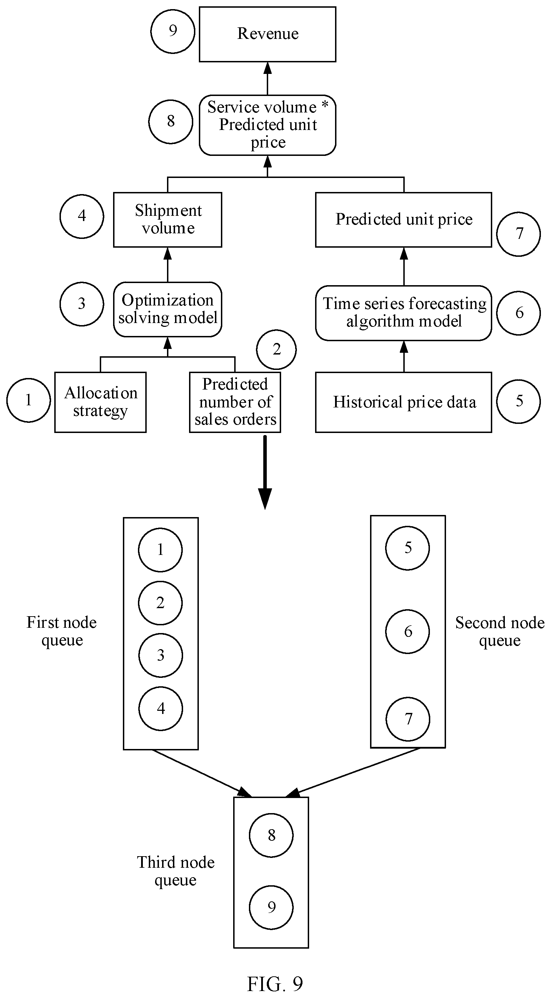

For example, FIG. 9 is a diagram of generating node queues based on a computational graph according to an embodiment of this application. As shown in FIG. 9, the computational graph includes nine nodes in total. A node 1 and a node are connected to a node 3, the node 3 is connected to a node 4, a node 5 is connected to a node 6, the node 6 is connected to a node 7, the node 4 and the node 7 are connected to a node 8, and the node 8 is connected to a node 9. A first node queue, a second node queue, and a third node queue may be generated based on connection relationships (that is, data dependencies) between the nodes in the computational graph. The first node queue includes the node 1, the node 2, the node 3, and the node 4 that are sequentially ordered. The second node queue includes the node 5, the node 6, and the node 7 that are sequentially ordered. The third node queue includes the node 8 and the node 9 that are sequentially ordered. In addition, the first node queue and the second node queue are executed in parallel, while the third node queue is executed after execution of the first node queue and the second node queue is completed.

The foregoing describes a procedure of constructing and executing the computational graph to implement financial data processing. In some scenarios, a user may need to adjust an operation mode or financial data in the computational graph, and perform a test inference based on an adjusted computational graph, to determine impact on a financial data processing procedure after the operation mode or the financial data is adjusted, to deduce various service development situations in a service scenario.

Based on this, this embodiment further provides an association analysis method before and after computational graph adjustment, so that an affected node before and after the computational graph adjustment is analyzed, and a specific change in the affected node is presented, enabling the user to quickly learn of impact on the entire financial data processing procedure after the computational graph adjustment.

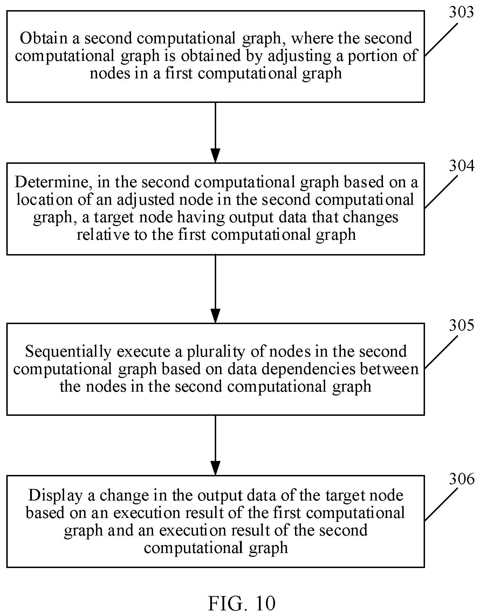

For example, FIG. 10 is another schematic flowchart of a financial data processing method according to an embodiment of this application. As shown in FIG. 10, based on the embodiment shown in FIG. 3, the following steps 303 to 306 may be further included.

Step 303: Obtain a second computational graph, where the second computational graph is obtained by adjusting a portion of the nodes in the first computational graph.

In this embodiment, the second computational graph is obtained by adjusting a portion of the nodes in the first computational graph based on the first computational graph. Optionally, the portion of the nodes that are adjusted include any one or more of the following nodes: the node indicating the financial input data, the node indicating the algorithm model function, or the node indicating the rule function. In other words, the second computational graph may be obtained by adjusting the financial input data or operation modes such as the algorithm model function and the rule function in the first computational graph.

For example, the financial input data may change in different time periods. Therefore, the node indicating the financial input data may be adjusted. For example, the computational graph shown in FIG. 4 is used as an example. Given that a manufacturing gross margin needs to be determined weekly based on the computational graph, because both historical price data and a predicted number of sales orders may change weekly, a node indicating the historical price data and a node indicating the predicted number of sales orders may be adjusted to obtain a new computational graph.

For another example, for the same type of financial data, in a process of constructing the computational graph, a user may intend to compare impact of different operation modes on a final processing procedure. Therefore, a node indicating an operation mode like the algorithm model function or the rule function may be adjusted. For example, the computational graph shown in FIG. 4 is used as an example. When the user registers a plurality of different time series forecasting algorithm models as external functions, the user may intend to compare impact of the different time series forecasting algorithm models on the entire data processing procedure. Therefore, the node indicating the time series forecasting algorithm model may be adjusted to obtain a new computational graph.

Step 304: Determine, in the second computational graph based on a location of an adjusted node in the second computational graph, a target node having output data that changes relative to the first computational graph.

Because each node in the second computational graph is connected to a directed edge, the target node having output data that changes relative to the first computational graph can be determined in the second computational graph based on the location of the adjusted node in the second computational graph and a connection relationship between nodes in the second computational graph. The target node includes the adjusted node and a node that can be reached by the adjusted node by using a directed edge.

Step 305: Sequentially execute a plurality of nodes in the second computational graph based on data dependencies between the nodes in the second computational graph.

A process of executing the second computational graph is similar to a process of executing the first computational graph. For details, refer to step 302. Details are not described herein again.

Step 306: Display a change in the output data of the target node based on an execution result of the first computational graph and an execution result of the second computational graph.

Because a node with affected output data is the target node, after execution of the second computational graph is completed, the execution result of the second computational graph and the execution result of the first computational graph (that is, output data of each node) may be compared, to obtain and display the change in the output data of the target node. The change in the output data of the target node may be information such as values of the output data before and after the change, a change percentage of the output data, and a change amount of the output data. This is not specifically limited herein.

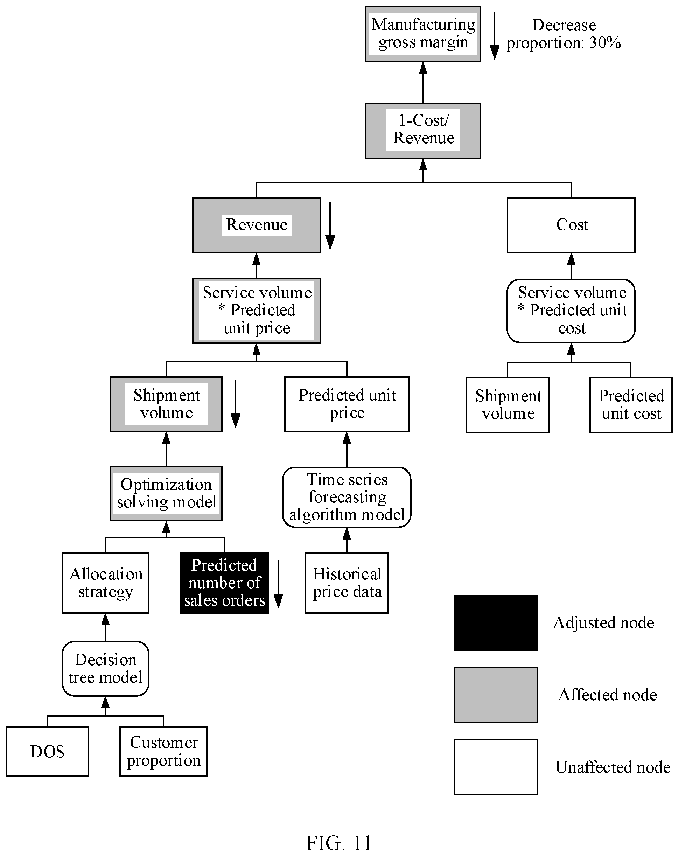

For example, FIG. 11 is a diagram of display of an adjusted computational graph according to an embodiment of this application. As shown in FIG. 11, the computational graph shown in FIG. 11 is obtained by adjusting, based on the computational graph shown in FIG. 4, a node indicating a predicted number of sales orders. After the computational graph is adjusted, based on data dependencies between nodes in the computational graph, it may be determined that nodes with affected output data include a node indicating an optimization solving model, a node indicating a shipment volume, a node indicating a revenue solving manner, a node indicating a revenue, a node indicating a manufacturing gross margin, and a node indicating a manufacturing gross margin. That is, the foregoing target node may include, for example, the adjusted node and the affected nodes shown in FIG. 11.

Further, for the node indicating the predicted number of sales orders, the predicted number of sales orders indicated by the node decreases. In this way, after the computational graph shown in FIG. 4 and the computational graph shown in FIG. 11 are executed, a change in output data of the affected nodes may be displayed in the computational graph shown in FIG. 11 based on execution results of the two computational graphs. As shown in FIG. 11, in the computational graph, output data (that is, the shipment volume) of the node indicating the shipment volume decreases, output data (that is, the revenue) of the node indicating the revenue decreases, and output data (that is, the manufacturing gross margin) of the node indicating the manufacturing gross margin decreases. In addition, for final output data (that is, the manufacturing gross margin) of the computational graph, a change proportion obtained by comparing the computational graph after the adjustment and the computational graph before the adjustment may be displayed, that is, a decrease proportion of the manufacturing gross margin is 30%. In this way, impact of adjusting the predicted number of sales orders on the entire data processing procedure can be intuitively displayed.

The foregoing describes in detail the method provided in embodiments of this application. The following describes a device that is provided in embodiments of this application and that is configured to perform the foregoing method.

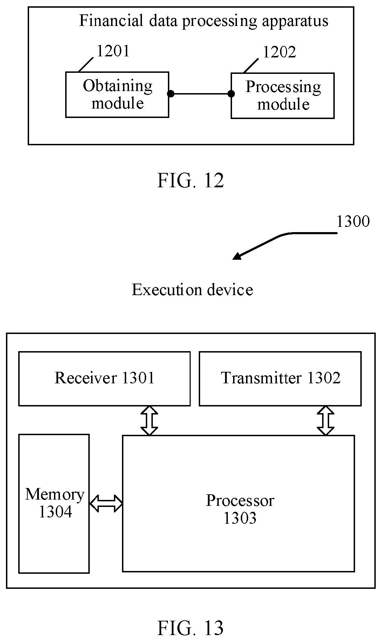

FIG. 12 is a diagram of a structure of a financial data processing apparatus according to an embodiment of this application. As shown in FIG. 11, the financial data processing apparatus provided in an embodiment of this application includes: an obtaining module 1201, configured to obtain a first computational graph, where the first computational graph includes a plurality of nodes and a plurality of directed edges, the plurality of nodes are connected by using the plurality of directed edges, the plurality of directed edges are used to represent data dependencies between the nodes, the plurality of nodes include a first node, a second node, and a third node, the first node indicates financial input data, the second node indicates a pre-registered algorithm model function, and the third node indicates a rule function constructed based on an operation rule of financial data; and a processing module 1202, configured to sequentially execute the plurality of nodes in the first computational graph based on the data dependencies between the nodes in the first computational graph, to obtain an output result, where the output result includes output data corresponding to the plurality of nodes. A process of executing the first node includes obtaining the financial input data and using the financial input data as input data for a node connected to the first node, a process of executing the second node includes calling the algorithm model function to process input data of the second node, and a process of executing the third node includes calling the rule function to perform a rule operation on input data of the third node.

In a possible implementation, the algorithm model function is obtained by registering a target algorithm model as an external function, and the target algorithm model includes a statistical learning algorithm model and/or a machine learning algorithm model.

In a possible implementation, the rule function is obtained based on a pre-constructed expert experience model, and the expert experience model indicates a plurality of operations to be sequentially performed on input data.

In a possible implementation, the obtaining module 1201 is further configured to obtain a second computational graph, where the second computational graph is obtained by adjusting a portion of the nodes in the first computational graph. The processing module 1202 is further configured to determine, in the second computational graph based on a location of an adjusted node in the second computational graph, a target node having output data that changes relative to the first computational graph. The processing module 1202 is further configured to sequentially execute a plurality of nodes in the second computational graph based on data dependencies between the nodes in the second computational graph. The processing module 1202 is further configured to display a change in the output data of the target node based on an execution result of the first computational graph and an execution result of the second computational graph.

In a possible implementation, the portion of the nodes includes any one or more of the following nodes: the node indicating the financial input data, the node indicating the algorithm model function, or the node indicating the rule function.

In a possible implementation, the processing module 1202 is further configured to: perform orchestration based on the data dependencies between the nodes in the first computational graph, to obtain a first node queue and a second node queue, where both the first node queue and the second node queue include a plurality of sequentially ordered nodes, and there is no data dependency between the nodes included in the first node queue and the nodes included in the second node queue; and execute the first node queue and the second node queue in parallel, where respective node execution sequences for the first node queue and the second node queue are determined based on ordering results of the nodes in the respective node queues.

In a possible implementation, the processing module 1202 is further configured to: perform orchestration based on the data dependencies between the nodes in the first computational graph, to obtain a third node queue, where the third node queue includes a plurality of sequentially ordered nodes; and use output data of the first node queue and output data of the second node queue as input data for the third node queue, and execute the third node queue.

In a possible implementation, the obtaining module 1201 is further configured to obtain a plurality of node creation instructions and a plurality of node connection instructions, where the plurality of node creation instructions are each used to instruct creation of a node in the first computational graph, and the plurality of node connection instructions are each used to instruct connection of the created nodes. The processing module 1202 is further configured to create the plurality of nodes based on the plurality of node creation instructions, and create the plurality of directed edges based on the plurality of node connection instructions, to obtain the first computational graph.

In a possible implementation, the first node specifically indicates a type of the financial input data, and there is a mapping relationship between the type of the financial input data and a target data structure. The obtaining module 1201 is further configured to call, based on the type of the financial input data indicated by the first node and the mapping relationship, data indicated by the target data structure as the financial input data.

In a possible implementation, the first computational graph further includes a fourth node, and the fourth node indicates a financial indicator articulation model. A process of executing the fourth node includes calling the financial indicator articulation model to perform an articulation operation on a plurality of pieces of input data of the fourth node.

FIG. 13 is a diagram of a structure of an execution device according to an embodiment of this application. The execution device 1300 may be specifically represented as a server, a personal computer, a notebook computer, or the like. This is not limited herein. Specifically, the execution device 1300 includes a receiver 1301, a transmitter 1302, a processor 1303, and a memory 1304 (there may be one or more processors 1303 in the execution device 1300, and one processor is used as an example in FIG. 13). In some embodiments of this application, the receiver 1301, the transmitter 1302, the processor 1303, and the memory 1304 may be connected through a bus or in another manner.

The memory 1304 may include a read-only memory and a random access memory, and provide instructions and data to the processor 1303. A portion of the memory 1304 may further include a non-volatile random access memory (non-volatile random access memory, NVRAM). The memory 1304 stores a processor and operation instructions, an executable module or a data structure, a subset thereof, or an extended set thereof. The operation instructions may include various operation instructions for implementing various operations.

The processor 1303 controls an operation of the execution device. In specific application, components of the execution device are coupled together through a bus system. In addition to a data bus, the bus system may further include a power bus, a control bus, a status signal bus, and the like. However, for clear description, various types of buses in the figure are referred to as the bus system.

The method disclosed in the foregoing embodiments of this application may be applied to the processor 1303, or may be implemented by the processor 1303. The processor 1303 may be an integrated circuit chip and has a signal processing capability. In an implementation process, steps in the foregoing methods can be implemented by using a hardware integrated logic circuit in the processor 1303, or by using instructions in a form of software. The processor 1303 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component.

The processor 1303 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1304, and the processor 1303 reads information in the memory 1304 and completes the steps in the foregoing methods in combination with hardware of the processor.

The receiver 1301 may be configured to receive input digital or character information, and generate a signal input related to related settings and function control of the execution device. The transmitter 1302 may be configured to output digital or character information through a first interface. The transmitter 1302 may be further configured to send instructions to a disk pack through the first interface, to modify data in the disk pack. The transmitter 1302 may further include a display device, for example, a display.

The execution device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, to cause the chip in the execution device to perform the method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

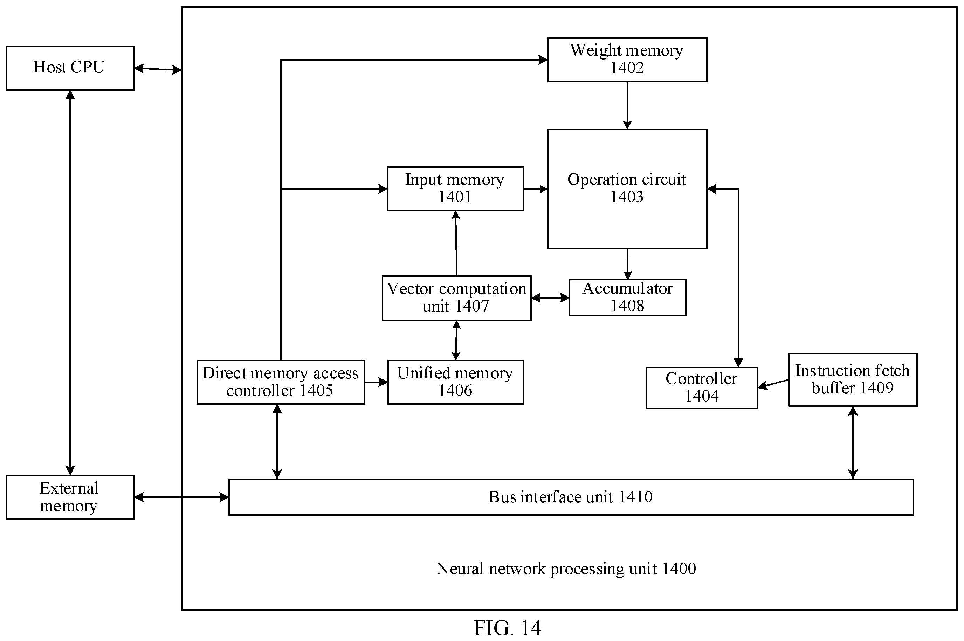

Specifically, FIG. 14 is a diagram of a structure of a chip according to an embodiment of this application. The chip may be represented as a neural network processing unit NPU 1400. The NPU 1400 is mounted to a host CPU (Host CPU) as a coprocessor, and a task is allocated by the host CPU. A core part of the NPU is an operation circuit 1403. A controller 1404 controls the operation circuit 1403 to extract matrix data in a memory and perform a multiplication operation.

In some implementations, the operation circuit 1403 includes a plurality of process engines (Process Engines, PEs). In some implementations, the operation circuit 1403 is a two-dimensional systolic array. The operation circuit 1403 may be alternatively a one-dimensional systolic array or another electronic circuit capable of performing mathematical operations such as multiplication and addition. In some implementations, the operation circuit 1403 is a general-purpose matrix processor.

For example, it is assumed that there is an input matrix A, a weight matrix B, and an output matrix C. The operation circuit fetches, from a weight memory 1402, data corresponding to the matrix B, and buffers the data on each PE in the operation circuit. The operation circuit fetches data of the matrix A from an input memory 1401, to perform a matrix operation on the matrix B, and stores an obtained partial result or an obtained final result of the matrix in an accumulator (accumulator) 1408.

A unified memory 1406 is configured to store input data and output data. Weight data is directly transferred to the weight memory 1402 through a direct memory access controller (Direct Memory Access Controller, DMAC) 1405. The input data is also transferred to the unified memory 1406 through the DMAC.

A BIU is a bus interface unit, namely, a bus interface unit 1410, and is used for interaction between an AXI bus and the DMAC and between the AXI bus and an instruction fetch buffer (Instruction Fetch Buffer, IFB) 1409.

The bus interface unit (Bus Interface Unit, BIU) 1410 is used by the instruction fetch buffer 1409 to obtain instructions from an external memory, and is further used by the direct memory access controller 1405 to obtain original data of the input matrix A or the weight matrix B from the external memory.

The DMAC is mainly configured to transfer input data in the external memory DDR to the unified memory 1406, or transfer weight data to the weight memory 1402, or transfer input data to the input memory 1401.

A vector computation unit 1407 includes a plurality of operation processing units. If needed, further processing, for example, vector multiplication, vector addition, an exponential operation, a logarithmic operation, or size comparison, is performed on an output of the operation circuit 1403. The vector computation unit 1407 is mainly configured to perform network computing at a non-convolutional/fully connected layer in a neural network, for example, batch normalization (Batch Normalization), pixel-level summation, and up-sampling on a feature map.

In some implementations, the vector computation unit 1407 can store a processed output vector in the unified memory 1406. For example, the vector computation unit 1407 may apply a linear function or a nonlinear function to the output of the operation circuit 1403, for example, perform linear interpolation on a feature map extracted from a convolutional layer, and for another example, obtain a vector of an accumulated value to generate an activation value. In some implementations, the vector computation unit 1407 generates a normalized value, a value obtained through pixel-level summation, or a combination thereof. In some implementations, the processed output vector can be used as an activated input to the operation circuit 1403. For example, the processed output vector can be used at a subsequent layer in the neural network.

The instruction fetch buffer (instruction fetch buffer) 1409 connected to the controller 1404 is configured to store instructions used by the controller 1404.

The unified memory 1406, the input memory 1401, the weight memory 1402, and the instruction fetch buffer 1409 are all on-chip memories. The external memory is private for a hardware architecture of the NPU.

Any one of the processors mentioned above may be a general-purpose central processing unit, a microprocessor, an ASIC, or one or more integrated circuits for controlling execution of the foregoing programs.

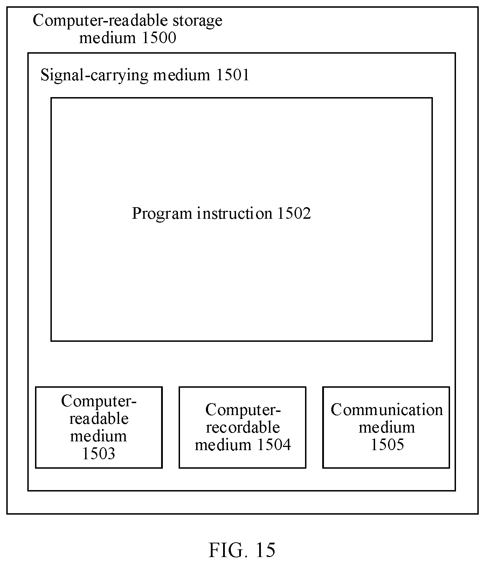

FIG. 15 is a diagram of a structure of a computer-readable storage medium according to an embodiment of this application. This application further provides a computer-readable storage medium. In some embodiments, the method disclosed in the foregoing embodiments may be implemented as computer program instructions encoded in a machine-readable format on the computer-readable storage medium or encoded in another non-transitory medium or product.

FIG. 15 schematically shows a conceptual partial view of an example computer-readable storage medium arranged according to at least some embodiments shown herein. The example computer-readable storage medium includes a computer program for executing a computer process on a compute device.

In an embodiment, the computer-readable storage medium 1500 is provided by using a signal-carrying medium 1501. The signal-carrying medium 1501 may include one or more program instructions 1502. When the one or more program instructions 1502 are run by one or more processors, all or some functions described in the foregoing embodiments may be provided.

In some examples, the signal-carrying medium 1501 may include a computer-readable medium 1503, for example, but not limited to, a hard disk drive, a compact disc (CD), a digital video disc (DVD), a digital tape, a memory, a ROM, or a RAM.

In some implementations, the signal-carrying medium 1501 may include a computer-recordable medium 1504, for example, but not limited to, a memory, a read/write (R/W) CD, or an R/W DVD. In some implementations, the signal-carrying medium 1501 may include a communication medium 1505, for example, but not limited to, a digital and/or analog communication medium (for example, an optical fiber, a waveguide, a wired communication link, or a wireless communication link). Therefore, for example, the signal-carrying medium 1501 may be conveyed by the communication medium 1505 in a wireless form (for example, a wireless communication medium that complies with the IEEE 802.X standard or another transmission protocol).

The one or more program instructions 1502 may be, for example, computer-executable instructions or logic implementation instructions. In some examples, the compute device of the compute device may be configured to provide various operations, functions, or actions in response to the program instructions 1502 conveyed to the compute device by using one or more of the computer-readable medium 1503, the computer-recordable medium 1504, and/or the communication medium 1505.

In addition, it should be noted that the apparatus embodiments described above are merely examples. The units described as separate parts may or may not be physically separate, and parts displayed as units may or may not be physical units, to be specific, may be located in one position, or may be distributed on a plurality of network units. Some or all of the modules may be selected based on actual requirements to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Generally, any functions that can be performed by a computer program can be easily implemented by using corresponding hardware. Moreover, a specific hardware structure used to achieve the same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technologies may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the foregoing embodiments, all or some of the foregoing embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium that can be stored by the computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

## Claims

1. A financial data processing method, comprising:
obtaining a first computational graph, wherein the first computational graph comprises a plurality of nodes and a plurality of directed edges, the plurality of nodes are connected by using the plurality of directed edges, the plurality of directed edges are used to represent data dependencies between the nodes, the plurality of nodes comprise a first node, a second node, and a third node, the first node indicates financial input data, the second node indicates a pre-registered algorithm model function, and the third node indicates a rule function constructed based on an operation rule of financial data; and
sequentially executing the plurality of nodes in the first computational graph based on the data dependencies between the nodes in the first computational graph, to obtain an output result, wherein the output result comprises output data corresponding to the plurality of nodes, wherein
a process of executing the first node comprises obtaining the financial input data and using the financial input data as input data for a node connected to the first node, a process of executing the second node comprises calling the algorithm model function to process input data of the second node, and a process of executing the third node comprises calling the rule function to perform a rule operation on input data of the third node.

2. The method according to claim 1, wherein the algorithm model function is obtained by registering a target algorithm model as an external function, and the target algorithm model comprises a statistical learning algorithm model and/or a machine learning algorithm model.

3. The method according to claim 1 or 2, wherein the rule function is obtained based on a pre-constructed expert experience model, and the expert experience model indicates a plurality of operations to be sequentially performed on input data.

4. The method according to any one of claims 1 to 3, wherein the method further comprises:
obtaining a second computational graph, wherein the second computational graph is obtained by adjusting a portion of the nodes in the first computational graph;
determining, in the second computational graph based on a location of an adjusted node in the second computational graph, a target node having output data that changes relative to the first computational graph;
sequentially executing a plurality of nodes in the second computational graph based on data dependencies between the nodes in the second computational graph; and
displaying a change in the output data of the target node based on an execution result of the first computational graph and an execution result of the second computational graph.

5. The method according to claim 4, wherein the portion of the nodes comprises any one or more of the following nodes: the node indicating the financial input data, the node indicating the algorithm model function, or the node indicating the rule function.

6. The method according to any one of claims 1 to 5, wherein the sequentially executing the plurality of nodes in the first computational graph based on the data dependencies between the nodes in the first computational graph comprises:
performing orchestration based on the data dependencies between the nodes in the first computational graph, to obtain a first node queue and a second node queue, wherein both the first node queue and the second node queue comprise a plurality of sequentially ordered nodes, and there is no data dependency between the nodes comprised in the first node queue and the nodes comprised in the second node queue; and
executing the first node queue and the second node queue in parallel, wherein respective node execution sequences for the first node queue and the second node queue are determined based on ordering results of the nodes in the respective node queues.

7. The method according to claim 6, wherein the sequentially executing the plurality of nodes in the first computational graph based on the data dependencies between the nodes in the first computational graph further comprises:
performing orchestration based on the data dependencies between the nodes in the first computational graph, to obtain a third node queue, wherein the third node queue comprises a plurality of sequentially ordered nodes; and
using output data of the first node queue and output data of the second node queue as input data for the third node queue, and executing the third node queue.

8. The method according to any one of claims 1 to 7, wherein the obtaining the first computational graph comprises:
obtaining a plurality of node creation instructions and a plurality of node connection instructions, wherein the plurality of node creation instructions are each used to instruct creation of a node in the first computational graph, and the plurality of node connection instructions are each used to instruct connection of the created nodes; and
creating the plurality of nodes based on the plurality of node creation instructions, and creating the plurality of directed edges based on the plurality of node connection instructions, to obtain the first computational graph.

9. The method according to any one of claims 1 to 8, wherein the first node specifically indicates a type of the financial input data, and there is a mapping relationship between the type of the financial input data and a target data structure; and
the obtaining the financial input data comprises:
calling, based on the type of the financial input data indicated by the first node and the mapping relationship, data indicated by the target data structure as the financial input data.

10. The method according to any one of claims 1 to 9, wherein the first computational graph further comprises a fourth node, and the fourth node indicates a financial indicator articulation model, wherein
a process of executing the fourth node comprises calling the financial indicator articulation model to perform an articulation operation on a plurality of pieces of input data of the fourth node.

11. A financial data processing apparatus, comprising:
an obtaining module, configured to obtain a first computational graph, wherein the first computational graph comprises a plurality of nodes and a plurality of directed edges, the plurality of nodes are connected by using the plurality of directed edges, the plurality of directed edges are used to represent data dependencies between the nodes, the plurality of nodes comprise a first node, a second node, and a third node, the first node indicates financial input data, the second node indicates a pre-registered algorithm model function, and the third node indicates a rule function constructed based on an operation rule of financial data; and
a processing module, configured to sequentially execute the plurality of nodes in the first computational graph based on the data dependencies between the nodes in the first computational graph, to obtain an output result, wherein the output result comprises output data corresponding to the plurality of nodes, wherein
a process of executing the first node comprises obtaining the financial input data and using the financial input data as input data for a node connected to the first node, a process of executing the second node comprises calling the algorithm model function to process input data of the second node, and a process of executing the third node comprises calling the rule function to perform a rule operation on input data of the third node.

12. The apparatus according to claim 11, wherein the algorithm model function is obtained by registering a target algorithm model as an external function, and the target algorithm model comprises a statistical learning algorithm model and/or a machine learning algorithm model.

13. The apparatus according to claim 11 or 12, wherein the rule function is obtained based on a pre-constructed expert experience model, and the expert experience model indicates a plurality of operations to be sequentially performed on input data.

14. The apparatus according to any one of claims 11 to 13, wherein
the obtaining module is further configured to obtain a second computational graph, wherein the second computational graph is obtained by adjusting a portion of the nodes in the first computational graph;
the processing module is further configured to determine, in the second computational graph based on a location of an adjusted node in the second computational graph, a target node having output data that changes relative to the first computational graph;
the processing module is further configured to sequentially execute a plurality of nodes in the second computational graph based on data dependencies between the nodes in the second computational graph; and
the processing module is further configured to display a change in the output data of the target node based on an execution result of the first computational graph and an execution result of the second computational graph.

15. The apparatus according to claim 14, wherein the portion of the nodes comprises any one or more of the following nodes: the node indicating the financial input data, the node indicating the algorithm model function, or the node indicating the rule function.

16. The apparatus according to any one of claims 11 to 15, wherein the processing module is further configured to:
perform orchestration based on the data dependencies between the nodes in the first computational graph, to obtain a first node queue and a second node queue, wherein both the first node queue and the second node queue comprise a plurality of sequentially ordered nodes, and there is no data dependency between the nodes comprised in the first node queue and the nodes comprised in the second node queue; and
execute the first node queue and the second node queue in parallel, wherein respective node execution sequences for the first node queue and the second node queue are determined based on ordering results of the nodes in the respective node queues.

17. The apparatus according to claim 16, wherein the processing module is further configured to:
perform orchestration based on the data dependencies between the nodes in the first computational graph, to obtain a third node queue, wherein the third node queue comprises a plurality of sequentially ordered nodes; and
use output data of the first node queue and output data of the second node queue as input data for the third node queue, and execute the third node queue.

18. The apparatus according to any one of claims 11 to 17, wherein
the obtaining module is further configured to obtain a plurality of node creation instructions and a plurality of node connection instructions, wherein the plurality of node creation instructions are each used to instruct creation of a node in the first computational graph, and the plurality of node connection instructions are each used to instruct connection of the created nodes; and
the processing module is further configured to create the plurality of nodes based on the plurality of node creation instructions, and create the plurality of directed edges based on the plurality of node connection instructions, to obtain the first computational graph.

19. The apparatus according to any one of claims 11 to 18, wherein the first node specifically indicates a type of the financial input data, and there is a mapping relationship between the type of the financial input data and a target data structure; and
the obtaining module is further configured to call, based on the type of the financial input data indicated by the first node and the mapping relationship, data indicated by the target data structure as the financial input data.

20. The apparatus according to any one of claims 11 to 19, wherein the first computational graph further comprises a fourth node, and the fourth node indicates a financial indicator articulation model, wherein
a process of executing the fourth node comprises calling the financial indicator articulation model to perform an articulation operation on a plurality of pieces of input data of the fourth node.

21. A financial data processing apparatus, comprising a memory and a processor, wherein the memory stores code, the processor is configured to execute the code, and when the code is executed, the apparatus performs the method according to any one of claims 1 to 10.

22. A computer storage medium, wherein the computer storage medium stores instructions, and when the instructions are executed by a computer, the computer is caused to implement the method according to any one of claims 1 to 10.
